# EUROPEAN PATENT SPECIFICATION

(11) **EP 2 426 776 B1**
(45) Date of publication and mention of the grant of the patent: **20.06.2018**
(21) Application number: 10769884.7
(22) Date of filing: 15.04.2010
(51) Int. Cl.: H01M 10/633, H01M 10/6563, H01M 10/613, H01M 10/6569, F25D 29/00, F25D 23/00, H01M 10/48, H01M 2/10

(54) **COOLING SYSTEM FOR BATTERY SYSTEMS AND A METHOD FOR COOLING BATTERY SYSTEMS**
KÜHLSYSTEM FÜR BATTERIESYSTEME UND KÜHLVERFAHREN FÜR BATTERIESYSTEME
SYSTÈME DE REFROIDISSEMENT POUR SYSTÈMES DE BATTERIES ET PROCÉDÉ DE REFROIDISSEMENT DE SYSTÈMES DE BATTERIES

(30) Priority: 30.04.2009 US 433155
(43) Date of publication of application: 07.03.2012
(73) Proprietor: LG Chem, Ltd., Youngdungpo-gu Seoul 150-721 (KR)
(72) Inventor: KOETTING, William, Davisburg, MI 48350 (US); PAYNE, Josh, Royal Oak, MI 48073 (US); TOM, Kwok, Madison Heights, MI 48071 (US)
(74) Representative: Hoffmann Eitle
(86) International application number: PCT/KR2010/002334
(87) International publication number: WO 2010/126239

(56) References cited:
- EP-A1- 2 262 048
- WO-A1-2008/111162
- JP-A- 10 306 722
- JP-A- 2001 105 843
- JP-A- 2008 054 379
- JP-A- 2008 054 379
- JP-A- 2008 062 875
- KR-A- 20080 090 162

## Description

### TECHNICAL FIELD

This application relates to a cooling system for a battery system and a method for cooling the battery system.

### BACKGROUND OF THE INVENTION

In a typical air-cooled battery pack, ambient air from ambient atmosphere is directed across battery cells in the battery pack and is subsequently exhausted from the battery pack. However, the typical air-cooled battery pack has a major challenge in maintaining a temperature of the battery pack within a desired temperature range.

In particular, a maximum operating temperature of the battery cells can often be less than a temperature of ambient air utilized to cool the batteries. In this situation, it is impossible to maintain the battery cells within a desired temperature range in an air-cooled battery pack.

Accordingly, the inventors herein have recognized a need for an improved battery cell assembly that minimizes and/or eliminates the above-mentioned deficiency.

EP 2 262 048 A1, which is prior art under Art. 54(3) EPC, describes a battery device having a battery which is mounted in a battery case to accumulate power to be demanded and supplied to a motor for driving a vehicle. The battery case is designed in a hermetically-sealed structure, wherein a heat exchanger for cooling ambient atmosphere in the battery case and an air blower for blowing cold air of the heat exchanger to the battery are provided in the battery case, and inert gas or dried air is hermetically filled in the battery case under a state that the battery case is hermetically sealed.

JP 2008-054379 A1 describes a battery cooling system which is equipped with a battery which is used for a vehicle, a battery case which accommodates the battery, a blower fan which generates blast to the battery, being installed inside the battery case, and an evaporator which cools the blast by the heat exchange between a refrigerant flowing inside and the blast to be sent to the battery, being provided inside the battery case.

WO 2008/111162 A1 describes a cooling storage chamber, wherein cooling of a freezing compartment and a refrigeration compartment is performed alternately by supplying liquid refrigerant from a compressor and a condenser alternately to a chiller for the freezing compartment and an evaporator for the refrigeration compartment through a three-way valve. The ratio of refrigerant supply time to respective evaporators is not controlled based on the difference between a target temperature set for each storage compartment and the actual temperature measured in each storage compartment but controlled based on the integrated value of the difference.

### SUMMARY OF THE INVENTION

Aspects of the present invention are defined in claims 1 and 12 below. The dependent claims are directed to optional and preferred features.

A battery module cooling system in accordance with an exemplary embodiment is provided. The battery module cooling system includes a housing having a first enclosed portion and a second enclosed portion. The first enclosed portion is configured to receive a first battery module therein. A first evaporator is disposed in the first enclosed portion. A first evaporator fan is disposed proximate to the first evaporator in the first enclosed portion configured to recirculate air in a first closed flow path loop within the first enclosed portion. The first evaporator is configured to extract heat energy from the air in the first closed flow path loop to reduce a temperature level of the first battery module. A condenser is disposed in the second enclosed portion and fluidly coupled to the first evaporator. The condenser is configured to receive heat energy in a refrigerant from the first evaporator and to dissipate the heat energy. A compressor is disposed in the second enclosed portion that recirculates the refrigerant through the first evaporator and the condenser. A first flow balancing baffle is disposed proximate to the first evaporator fan, the first flow balancing baffle being substantially u-shaped with a plurality of apertures extending therethrough. A first flow balancing tray is disposed on the first flow balancing baffle, a second flow balancing tray is disposed on a top surface of the first battery module, and the first flow balancing tray and the second flow balancing tray have a plurality of apertures extending therethrough.

A method for cooling a battery system utilizing the above battery module a cooling system in accordance with another exemplary embodiment is provided. The battery module cooling system has a housing, a first evaporator, a first evaporator fan and a condenser. The housing has a first enclosed portion and a second enclosed portion, the first enclosed portion being configured to receive a first battery module therein. The method comprises: recirculating air in a first closed flow path loop within the first enclosed portion utilizing the first evaporator fan, the first evaporator configured to extract heat energy from the air in the first closed flow path loop to reduce a temperature level of the first battery module in the first enclosed portion of the housing; receiving heat energy in a refrigerant from the first evaporator in a condenser disposed in the second enclosed portion of the housing and dissipating the heat energy utilizing the condenser; and recirculating the refrigerant through the first evaporator and the condenser utilizing a compressor disposed in the second enclosed portion.

### BRIEF DESCRIPTION OF THE DRAWINGS

Figure 1 is a schematic of a power generation system having a battery system and a cooling system in accordance with an exemplary embodiment;
Figure 2 is a schematic of a portion of a housing, battery modules, and the cooling system utilized in the power generation system of Figure 1;
Figure 3 is a schematic of a top view of the housing, battery modules, and the cooling system utilized in the power generation system of Figure 1;
Figure 4 is a cross-sectional schematic of the power generation system of Figure 1;
Figure 5 is a block diagram of components of the cooling system utilized in the power generation system of Figure 1;
Figure 6 is a schematic of a portion of the housing and the cooling system utilized in the power generation system of Figure 1;
Figure 7 is another schematic of a portion of the housing and the cooling system utilized in the power generation system of Figure 1;
Figure 8 is another schematic of a portion of the housing, battery modules, and the cooling system utilized in the power generation system of Figure 1;
Figure 9 is another schematic of a portion of a housing, battery modules, and the cooling system utilized in the power generation system of Figure 1;
Figure 10 is an enlarged schematic of a portion of one battery module shown in Figure 9;
Figure 11 is another schematic of a portion of the housing, battery modules, and the cooling system utilized in the power generation system of Figure 1;
Figures 12-19 are flowcharts of a method for cooling a battery system in accordance with another exemplary embodiment; and
Figure 20 is a schematic of a portion of a housing, battery modules, and the cooling system utilized in another power generation system in accordance with another exemplary embodiment.

### DETAILED DESCRIPTION OF EXEMPLARY EMBODIMENTS

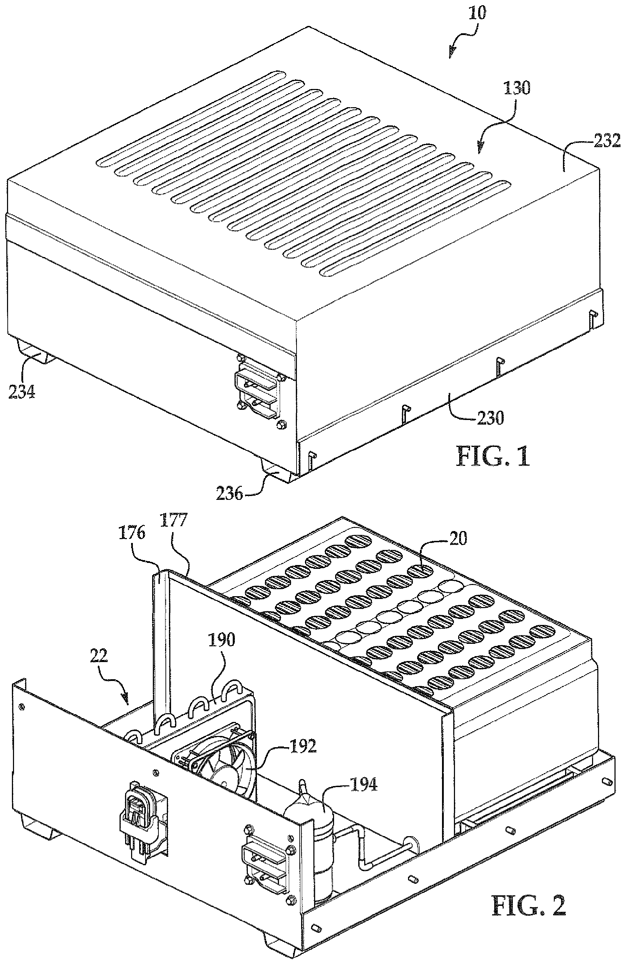

Referring to Figures 1-3, a power generation system 10 for outputting electrical power in accordance with an exemplary embodiment is illustrated. The power generation system 10 includes a battery system 20 and a cooling system 22.

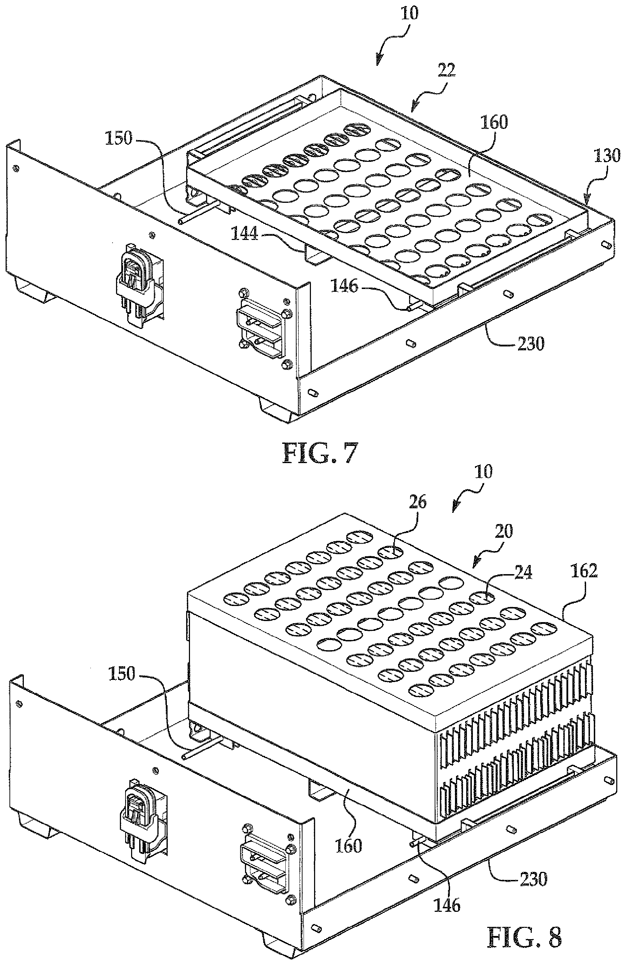

The battery system 20 is provided to output electrical power. The battery system 20 includes the battery modules 24, 26. Each of the battery modules 24, 26 has a similar structure and includes a plurality of battery cell assemblies that can be electrically connected in series to one another or in parallel to one another. For purposes of brevity, only a portion of the battery cell assemblies in the battery module 24 will be described in detail. For example, referring to Figures 8-10, the battery module 24 includes battery cell assemblies 28, 29, 30, 31, 32, 33, 34, 36, 38, 40 and 42 and flow channel manifolds 60, 62, 64, 66, 68, 70, 72, 74, 76 and 78. Each of the battery cell assemblies has a battery cell therein that generates an operational voltage between a pair of electrodes extending therefrom. In one exemplary embodiment, each battery cell is a lithium-ion battery cell. In alternative embodiments, the battery cells could be nickel-cadmium battery cells or nickel metal hydride battery cells for example. Of course, other types of battery cells known to those skilled in the art could be utilized.

The flow channel manifolds are provided to allow air to flow through air channels defined in each flow channel manifold. The air that flows through a flow channel manifold that is disposed between adjacent battery cell assemblies, extracts heat energy from the adjacent battery cell assemblies.

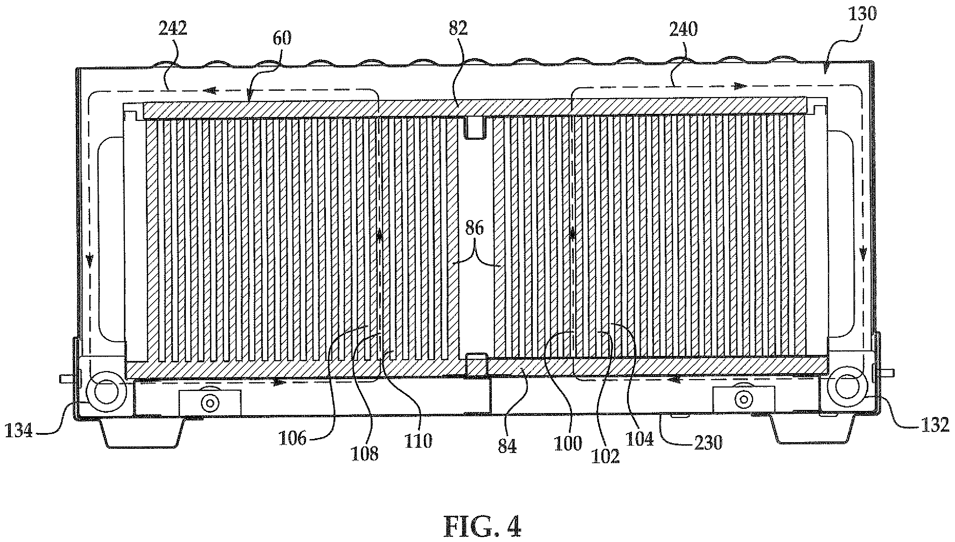

For example, referring to Figure 4, a brief explanation of the flow channel manifold 60 will be provided. It should be noted that the structure of flow channel manifolds 62, 64, 66, 68, 70, 72, 74, 76 and 78 have the same structure as flow channel manifold 60. As shown, the flow channel manifold 60 has an upper rail member 82, a lower rail member 84, and a plurality of vertical members 86. The upper rail member 82 and the lower rail member 84 are disposed substantially parallel to each another. The plurality of vertical members 86 are connected between the upper rail member 82 and the lower rail member 84 and are disposed substantially parallel to each other. The plurality of vertical members 86 are spaced apart from each other and define a plurality of air flow channels therein. For example, some of the vertical members 86 define air flow channels 100, 102, 104 (on a right side of Figure 4) in the flow channel manifold 60. Further, some of the vertical members 86 define air flow channels 106, 108, 110 (on a left side of Figure 4) in the flow channel manifold 60.

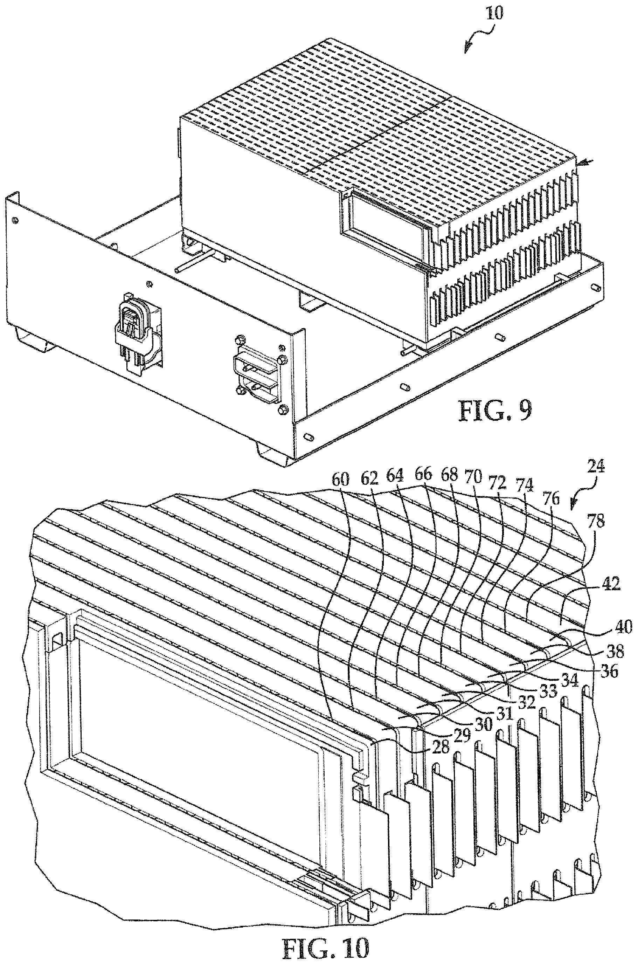

Referring to Figure 10, the flow channel manifold 60 is disposed between the battery cell assemblies 28, 29, and the flow channel manifold 62 is disposed between the battery cell assemblies 29, 30. Further, the flow channel manifold 64 is disposed between the battery cell assemblies 30, 31, and the flow channel manifold 66 is disposed between the battery cell assemblies 31, 32. Further, the flow channel manifold 68 is disposed between the battery cell assemblies 32, 33 and the flow channel manifold 70 is disposed between the battery cell assemblies 33, 34. Further, the flow channel manifold 72 is disposed between the battery cell assemblies 34, 36, and the flow channel manifold 74 is disposed between the battery cell assemblies 36, 38. Further, the flow channel manifold 76 is disposed between the battery cell assemblies 38, 40, and the flow channel manifold 78 is disposed between the battery cell assemblies 40, 42.

Referring to Figures 2, 3 and 5-8, the cooling system 22 is provided to maintain a battery system 20 within a desired temperature range, and in particular below a threshold temperature level in accordance with an exemplary embodiment is provided. The cooling system 22 includes a housing 130, evaporator fans 132, 134, evaporators 136, 138, flow balancing baffles 140, 142, a support member 144, conduit portions 146, 148, 150, flow balancing trays 160, 162, inner side walls 170, 172, 174, a dividing wall 176, a condenser 190, a condenser fan 192, the compressor 194, conduit portions 196, 198, 200, temperature sensors 210, 212, and a microprocessor 220. In one exemplary embodiment, the cooling system 22 can maintain the battery modules 24, 26 within a desired temperature range of 15° - 35° Celsius. Of course, other temperature ranges could also be utilized. In another exemplary embodiment, the cooling system 22 can maintain the battery modules 24, 26 at a temperature level less than a threshold temperature level of 40° Celsius. Of course, another threshold temperature level could be utilized.

Referring to Figure 1, the housing 130 is provided to enclose the battery system 20 and the cooling system 22 therein. The housing 130 includes a base member 230, a top cover 232 configured to be coupled to the base member 230, and standoff members 234, 236 that are disposed on the bottom surface of the base member 230. In one exemplary embodiment, the housing 130 is constructed from plastic. However, in alternative embodiments other materials known to those skilled in the art could be utilized to construct the housing 130.

Referring to Figures 1, 6 and 8, the evaporators 136, 138 are provided to extract heat energy from the battery modules 24, 26, respectively. The evaporators 136, 138 are disposed on the base member 230 of the housing 130. Further, the evaporators 136, 138 are disposed in an enclosed portion or space 180 within the housing 130. The evaporator 136 is configured to extract heat energy from air in a first closed flow path loop (described below) into a refrigerant flowing through the evaporator 136 to reduce a temperature level of the battery module 24. Similarly, the evaporator 138 is configured to extract heat energy from air in a second closed flow path loop (described below) into a refrigerant flowing through the evaporator 138 to reduce a temperature level of the battery module 26. Exemplary refrigerants include R-11, R-12, R-22, R-134A, R-407C and R-410A for example. Of course, other types of refrigerants known to those skilled in the art could be utilized.

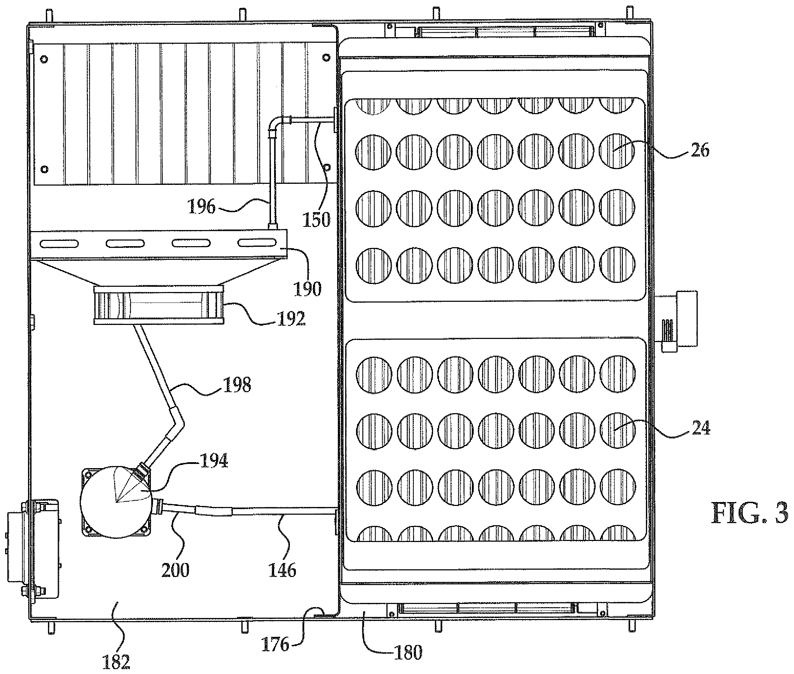

Referring to Figures 3, 4 and 6, a refrigerant flow path in the cooling system 22 will now be explained. As shown, the evaporator 136 is fluidly coupled to the compressor 194 via the conduit portions 200, 146. Further, the evaporator 136 is fluidly coupled to the evaporator 138 via the conduit portion 148. Further, the evaporator 138 is fluidly coupled to the condenser 190 via the conduit portions 150, 196. Further, the condenser 190 is fluidly coupled to the compressor 194 via the conduit portion 198. During operation, the compressor 194 pumps the refrigerant through a closed loop including the conduit portions 200, 146, the evaporator 136, the conduit portion 148, the evaporator 138, the conduit portions 150, 196, the condenser 190, the conduit portion 198 and back to the compressor 194.

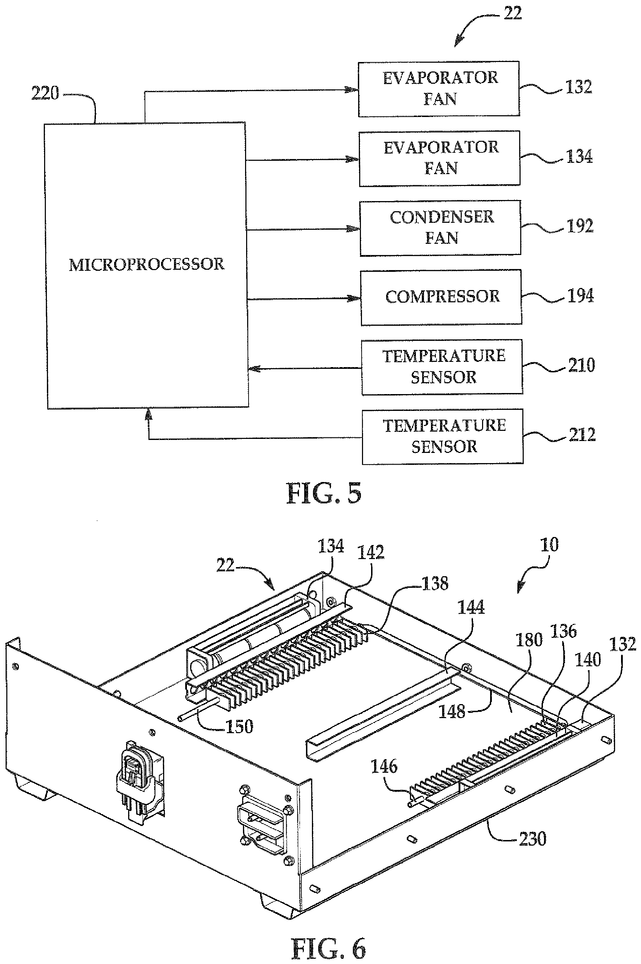

Referring to Figures 4 and 6, the evaporator fan 132 is disposed on the base member 230 of the housing 130. The evaporator fan 132 is configured to recirculate air in a closed flow path loop 240 within the first enclosed portion 180 of the housing 130. The closed flow path loop 240 includes a flow path through the evaporator fan 132, and past the evaporator 136 and then through air flow channels in the battery module 24 and then back through the evaporator fan 132.

The evaporator fan 134 is disposed on the base member 230 of the housing 130. The evaporator fan 134 is configured to recirculate air in a closed flow path loop 242 within the enclosed portion 182 of the housing 130. The closed flow path loop 242 includes a flow path through the evaporator fan 134, and past the evaporator 136 and then through air flow channels in the battery module 26 and then back through the evaporator fan 134.

The flow balancing baffle 140 is disposed proximate to the evaporator fan 132 on the base member 230 of the housing 130. The flow balancing baffle 140 is configured to allow a substantially equal amount of air flow through each aperture in the baffle 140 such than air flow is evenly distributed across a surface of the evaporator 136.
The flow balancing baffle 140 is substantially u-shaped with a plurality of apertures extending therethrough and is constructed from plastic.

The flow balancing baffle 142 is disposed proximate to the evaporator fan 134 on the base member 230 of the housing 130. The flow balancing baffle 142 is configured to allow a substantially equal amount of air flow through each aperture in the baffle 142 such than air flow is evenly distributed across a surface of the evaporator 138. In one exemplary embodiment, the flow balancing baffle 142 is substantially u-shaped with a plurality of apertures extending therethrough and is constructed from plastic.

The support member 144 is disposed on the base member 230 of the housing 130 between the evaporators 136, 138. In one exemplary embodiment, the support member 144 is substantially u-shaped and is constructed from plastic.

Referring to Figure 6, the conduit portion 146 is fluidly coupled to a first end of the evaporator 136. The conduit portion 148 is fluidly coupled between a second end of the evaporator 136 and a first end of the evaporator 138. Further, the conduit 150 is fluidly coupled to a second end of the evaporator 138. Thus, refrigerant can flow through the conduit portion 160, the evaporator 136, the conduit portion 148, the evaporator 138, and the conduit 150.

Referring to Figure 7, the flow balancing tray 160 is disposed on the flow balancing baffles 140, 142 and the support member 144 in the enclosed portion 180 of the housing 130. The flow balancing tray 160 is configured to allow a substantially equal amount of air flow through each aperture in the tray 160 such that air flow is evenly distributed across lower surfaces of the battery modules 24, 26. Further, the flow balancing tray 160 is configured to hold the battery modules 24, 26 thereon. The flow balancing tray 160 has a plurality of apertures extending therethrough. In one exemplary embodiment, the flow balancing tray 160 is constructed from plastic.

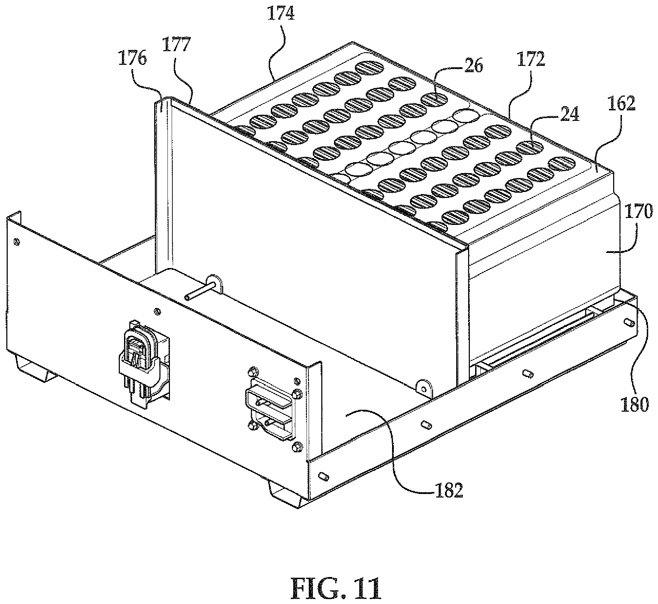

Referring to Figure 11, the flow balancing tray 162 is disposed on a top surface of the battery modules 24, 26 in the housing 130. The flow balancing tray 162 is configured to allow a substantially equal amount of air flow through each aperture in the tray 162 such than air flow is evenly distributed from the battery modules 24, 26 through the flow balancing tray 162.The flow balancing tray 162 has a plurality of apertures extending therethrough. In one exemplary embodiment, the flow balancing tray 162 is constructed from plastic.

Referring to Figures 1 and 11, the inner side walls 170, 172, 174 and the dividing wall 176 are disposed proximate to side walls of the battery modules 24, 26. The dividing wall 176 has a sealing gasket 177 disposed on an outer periphery of the dividing wall 176 to form an airtight seal with the base member 230 and the top cover 232 that contact the outer periphery of the dividing wall 176. Further, the base member 230, the top cover 232 and the dividing wall 176 define an enclosed portion 180 having the battery modules 24, 26 disposed therein. It should be noted that the enclosed portion 180 is an airtight enclosed portion. Further, the base member 230, the top cover 232 and the dividing wall 176 define an enclosed portion 184. In one exemplary embodiment, the enclosed portion 184 fluidly communicates with ambient air external to the housing 130. In one exemplary embodiment, the inner side walls 170, 172, 174 and the dividing wall 176 are constructed from plastic.

Referring to Figures 3 and 6, the condenser 190 is disposed in the enclosed portion 182 of the housing 130 and is fluidly coupled to the evaporators 136, 138 and the compressor 194. As shown, the condenser 190 is fluidly coupled to the evaporator 138 via the conduit portions 150, 196. Further, the condenser 190 is fluidly coupled to the compressor 194 via the conduit portion 198. The condenser 190 is configured to receive heat energy in a refrigerant from the evaporators 136, 138 and to dissipate the heat energy in the received refrigerant such that the heat energy is removed from the refrigerant for cooling the battery modules 24, 26.

Referring to Figures 3 and 5, the condenser fan 192 is configured to urge air past the condenser 190 to induce the condenser 190 to dissipate heat energy in response to a control signal from the microprocessor 220. As shown, the condenser fan 192 is disposed proximate to the condenser 190 in the enclosed region 182.

Referring to Figures 3, 5 and 6, the compressor 194 is configured to pump and recirculate refrigerant through the evaporators 136, 138 in response to a control signal from the microprocessor 220. In particular, the compressor 194 pumps the refrigerant through a closed loop including the conduit portions 200, 146, the evaporator 136, the conduit portion 148, the evaporator 138, the conduit portions 150, 190, the condenser 190, and the conduit portion 198 back to the compressor 194. As shown, the compressor 194 is disposed in the enclosed region 182.

Referring to Figures 3 and 5, the temperature sensor 210 is electrically coupled to the microprocessor 220 and is disposed proximate to the battery module 24. The temperature sensor 210 is configured to generate a signal indicative of a temperature of the battery module 24 that is received by the microprocessor 220.

The temperature sensor 212 is electrically coupled to the microprocessor 220 and is disposed proximate to the battery module 26. The temperature sensor 212 is configured to generate a signal indicative of a temperature of the battery module 26 that is received by the microprocessor 220.

The microprocessor 212 is configured to control operation of the cooling system 22. As shown, the microprocessor 212 is electrically coupled to the evaporator fans 132, 134, the condenser fan 192, the compressor 194, and the temperature sensors 210, 212. During operation, the microprocessor 212 receive signals from the temperature sensors 210, 212 indicative of temperatures of the battery modules 24, 26, respectively. Based on the received signals from the temperature sensors 210, 212, the microprocessor 212 generates control signals for controlling operation of the evaporator fans 132, 134, the condenser fan 192, and the compressor 194, as will be explained in greater detail below.

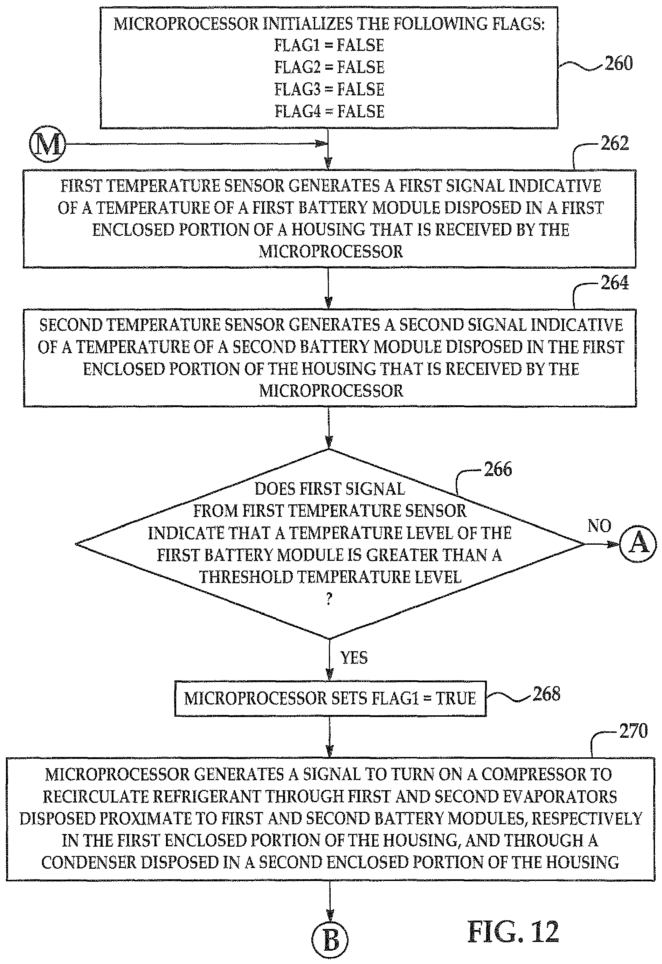

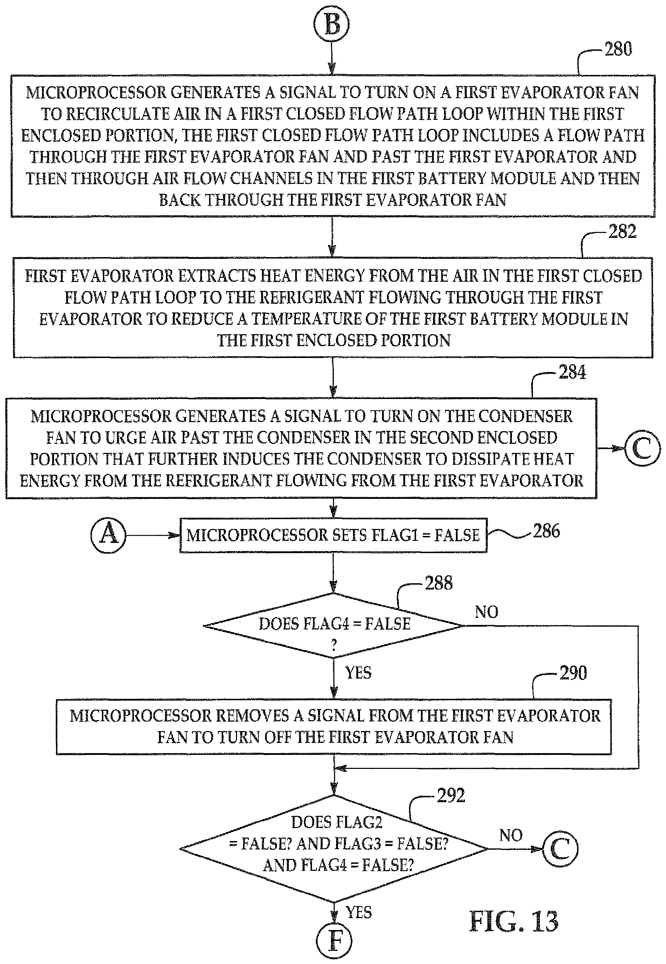

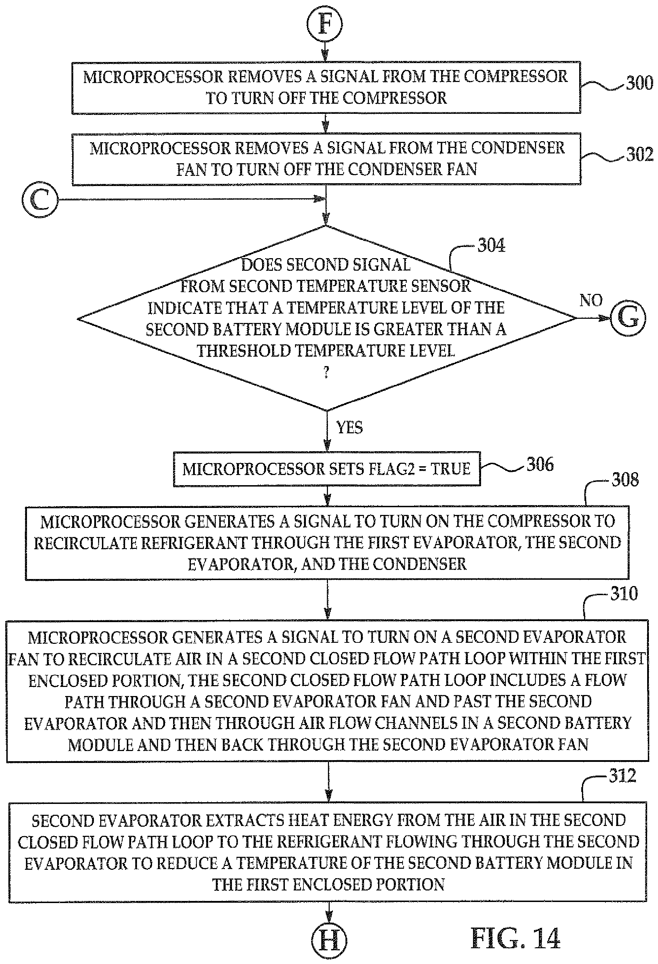

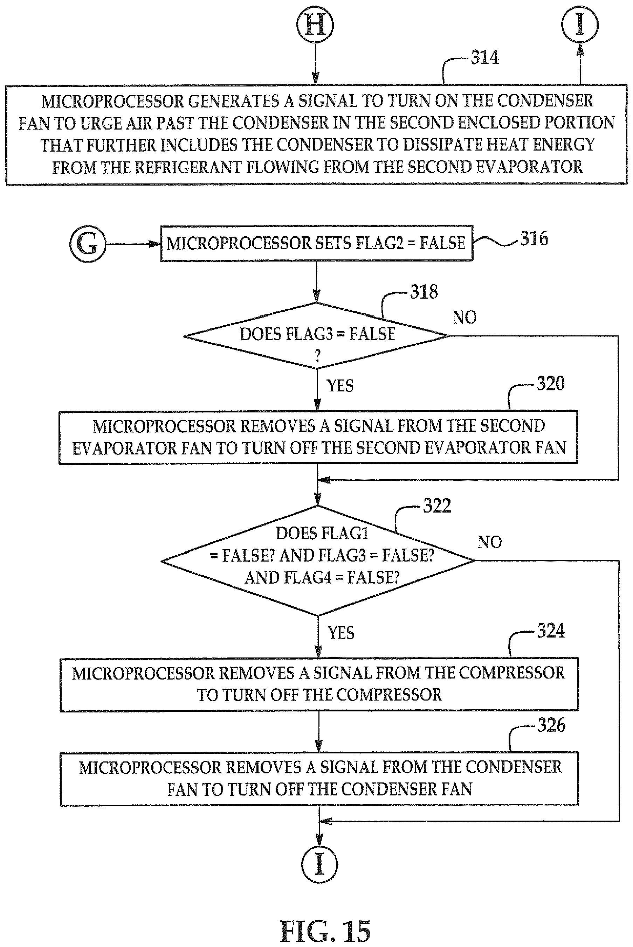

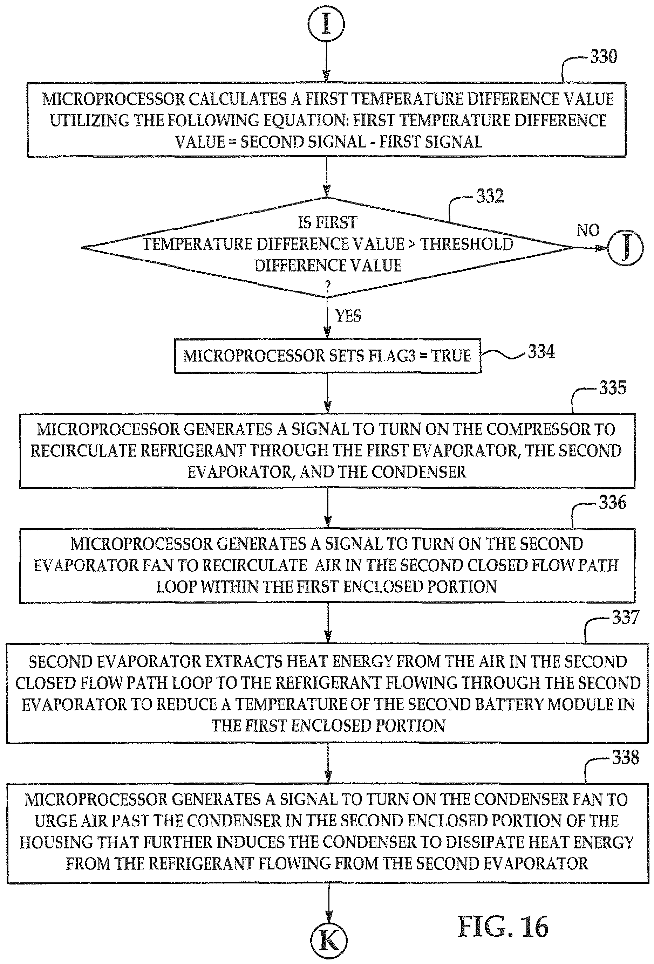

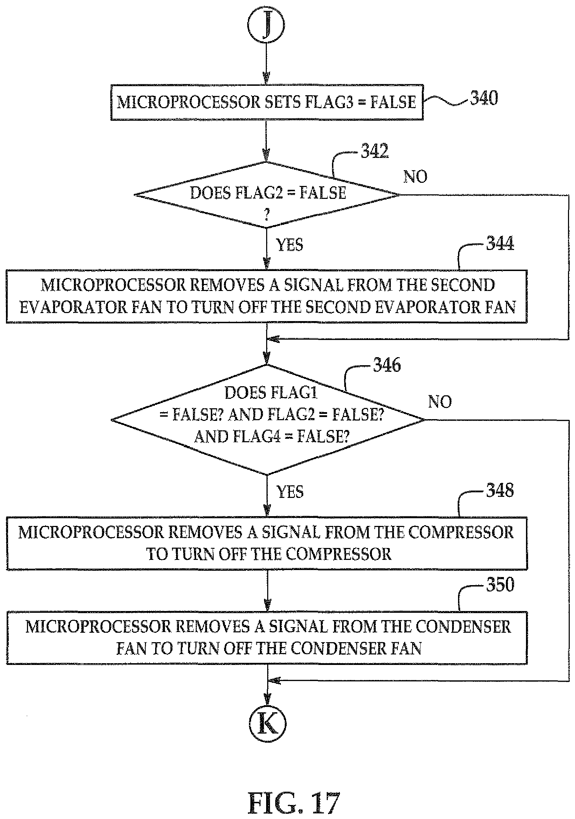

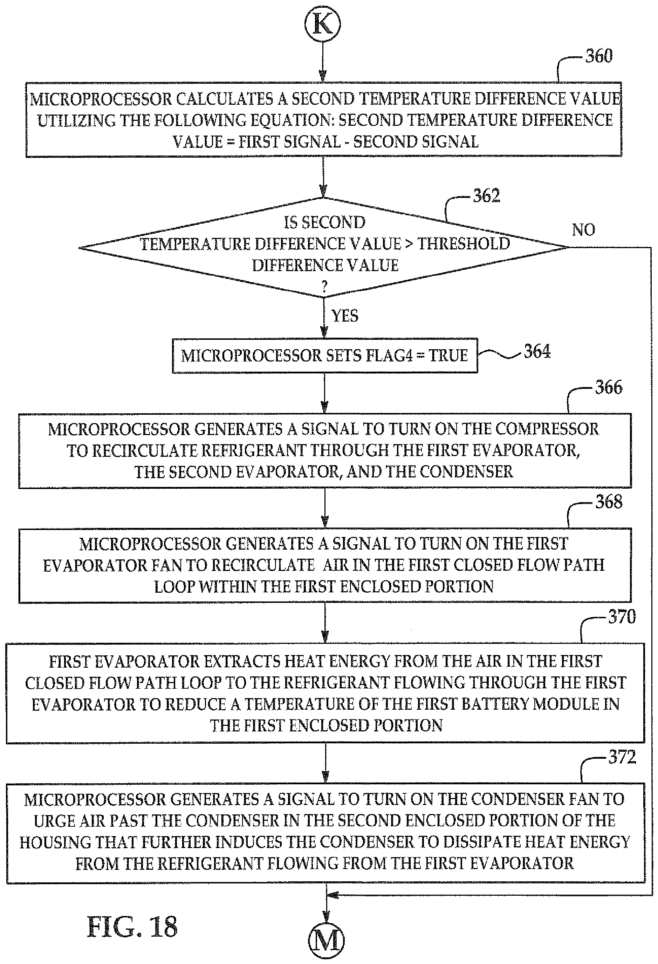

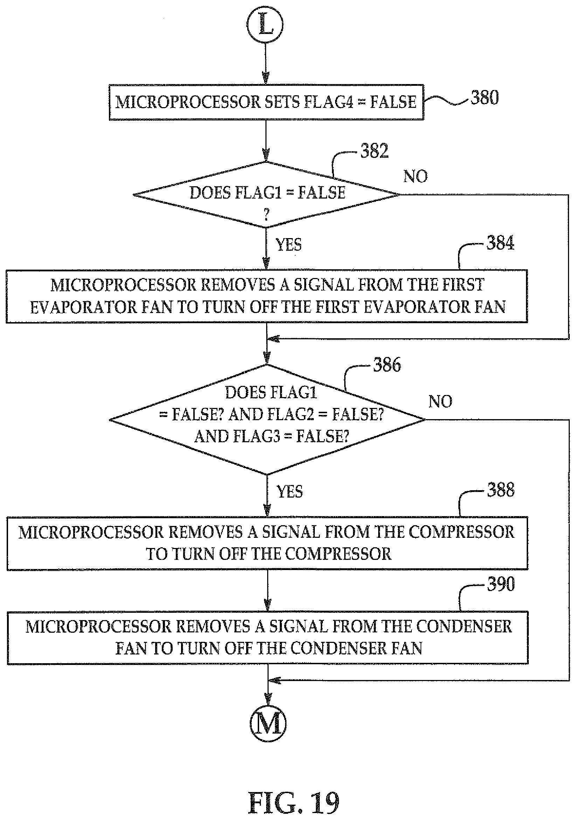

Referring to Figures 12-19, a flowchart of a method for cooling the battery system 20 will now be explained.

At step 260, the microprocessor 220 initializes the following flags: flag1 equals "false"; flag2 equals "false"; flag3 equals "false"; and flag4 equals "false." After step 260, the method advances to step 262.

At step 262, the temperature sensor 210 generates a first signal indicative of a temperature of the battery module 24 disposed in the enclosed portion 180 of the housing 130 that is received by the microprocessor 220. After step 262, the method advances to step 264.

At step 264, the temperature sensor 212 generates a second signal indicative of a temperature of the battery module 26 disposed in the enclosed portion 180 of the housing 130 that is received by the microprocessor 220. After step 264, the method advances to step 266.

At step 266, the microprocessor 220 makes a determination as to whether the first signal from the temperature sensor 210 indicates that a temperature level of the battery module 24 is greater than a threshold temperature level. If the value of step 266 equals "yes", the method advances to step 268. Otherwise, the method advances to step 286.

At step 268, the microprocessor 220 sets flag1 equal to "true." After step 268, the method advances to step 270.

At step 270, the microprocessor 220 generates a signal to turn on the compressor 194 to recirculate refrigerant through evaporators 132, 134 disposed proximate to battery module 24, 26, respectively in the enclosed portion 180 of the housing 130, and through the condenser 190 disposed in the enclosed portion 182 of the housing 130. After step 270, the method advances to step 280.

At step 280, the microprocessor 220 generates a signal to turn on the evaporator fan 132 to recirculate air in a first closed flow path loop 240 (shown in Figure 4) within the enclosed portion 180. The first closed flow path loop 240 includes a flow path through the evaporator fan 132 and past the evaporator 136 and then through air flow channels in the battery module 24 and then back through the evaporator fan 132. After step 280, the method advances to step 282.

At step 282, the evaporator 136 extracts heat energy from the air in the first closed flow path loop 240 to the refrigerant flowing through the evaporator 136 to reduce a temperature of the battery module 24 in the enclosed portion 180. After step 282, the method advances to step 284.

At step 284, the microprocessor 220 generates a signal to turn on the condenser fan 192 to urge air past the condenser 190 in the enclosed portion 182 that further induces the condenser 190 to dissipate heat energy from the refrigerant flowing from the evaporator 136. After step 284, the method advances to step 304.

Referring again to step 266, when the value of step 266 equals "no", the method advances to step 286. At step 286, the microprocessor 220 sets flag1 equal to "false." After step 286, the method advances to step 288.

At step 288, the microprocessor 220 makes a determination as to whether the flag4 equals "false." If the value of step 288 equals "yes", the method advances to step 290. Otherwise, the method advances to step 292.

At step 290, the microprocessor 220 removes a signal from the evaporator fan 132 to turn off the evaporator fan 132. After step 290, the method advances to step 292.

At step 292, the microprocessor 220 makes a determination as to whether the flag2 equals "false"; flag3 equals "false" and flag4 equals "false." If the value of step 292 equals "yes", the method advances to step 300. Otherwise, the method advances to step 304.

At step 300, the microprocessor 220 removes a signal from the compressor 194 to turn off the compressor 194. After step 300, the method advances to step 302.

At step 302, the microprocessor 220 removes a signal from the condenser fan 192 to turn off the condenser fan 192. After step 302, the method advances to step 304.

At step 304, the microprocessor 220 makes a determination as to whether the second signal from temperature sensor 212 indicates that a temperature level of the battery module 26 is greater than the threshold temperature level. If the value of step 304 equals "yes", the method advances to step 306. Otherwise, the method advances to step 316.

At step 306, the microprocessor 220 sets flag2 equal to "true." After step 306, the method advances to step 308.

At step 308, the microprocessor 220 generates a signal to turn on the compressor 194 to recirculate refrigerant through the evaporator 136, the evaporator 138, and the condenser 190. After step 308, the method advances to step 310.

At step 310, the microprocessor 220 generates a signal to turn on the evaporator fan 134 to recirculate air in a second closed flow path loop 242 (shown in Figure 4) within the enclosed portion 180. The second closed flow path loop 242 includes a flow path through the evaporator fan 134 and past the evaporator 138 and then through air flow channels in the battery module 26 and then back through the evaporator fan 134. After step 310, the method advances to step 312.

At step 312, the evaporator 138 extracts heat energy from the air in the second closed flow path loop 242 to the refrigerant flowing through the evaporator 138 to reduce a temperature of the battery module 26 in the enclosed portion 180. After step 312, the method advances to step 314.

At step 314, the microprocessor 220 generates a signal to turn on the condenser fan 192 to urge air past the condenser 190 in the enclosed portion 182 that further induces the condenser 190 to dissipate heat energy from the refrigerant flowing from the evaporator 138. After step 314, the method advances to step 330.

Referring again to step 304, if the value of step 304 equals "no", the method advances to step 316. At step 316, the microprocessor 220 sets flag2 equal to "false." After step 316, the method advances to step 318.

At step 318, the microprocessor 220 makes a determination as to whether the flag3 equals "false." If the value of step 318 equals "yes", the method advances to step 320. Otherwise, the method advances to step 322.

At step 320, the microprocessor 220 removes a signal from the evaporator fan 134 to turn off the evaporator fan 134. After step 320, the method advances to step 322.

At step 322, the microprocessor 220 makes a determination as to whether the flagl equals "false"; flag3 equals "false"; and flag4 equals "false." If the value of step 322 equals "yes", the method advances to step 324. Otherwise, the method advances to step 330.

At step 324, the microprocessor 220 removes a signal from the compressor 194 to turn off the compressor 194. After step 324, the method advances to step 326.

At step 326, the microprocessor 220 removes a signal from the condenser fan 192 to turn off the condenser fan 192. After step 326, the method advances to step 330.

At step 330, the microprocessor 220 calculates a first temperature difference value utilizing the following equation: first temperature difference value = second signal - first signal. After step 330, the method advances to step 332.

At step 332, the microprocessor 220 makes a determination as to whether the first temperature difference value is greater than a threshold difference value. If the value of step 332 equals "yes", the method advances to step 334. Otherwise, the method advances to step 340.

At step 334, the microprocessor 220 sets flag3 equal to "true." After step 334, the method advances to step 335.

At step 335, the microprocessor 220 generates a signal to turn on the compressor 194 to recirculate refrigerant through the evaporator 136, the evaporator 138, and the condenser 190. After step 335, the method advances to step 336.

At step 336, the microprocessor 220 generates a signal to turn on the evaporator fan 134 to recirculate air in the second closed flow path loop 242 within the enclosed portion 180. After step 336, the method advances to step 337.

At step 337, the evaporator 138 extracts heat energy from the air in the second closed flow path loop 242 to the refrigerant flowing through the evaporator 138 to reduce a temperature of the battery module 26 in the enclosed portion 180. After step 337, the method advances to step 338.

At step 338, the microprocessor 220 generates a signal to turn on the condenser fan 192 to urge air past the condenser 190 in the enclosed portion 182 of the housing 130 that further induces the condenser 190 to dissipate heat energy from the refrigerant flowing from the evaporator 138. After step 338, the method advances to step 360.

Referring again to step 332, when the value of step 332 equals "no", the method advances to step 340. At step 340, the microprocessor 220 sets flag3 equal to "false." After step 340, the method advances to step 342.

At step 342, the microprocessor 220 makes a determination as to whether the flag2 equals "false." If the value of step 342 equals "yes", the method advances to step 344. Otherwise, the method advances to step 346.

At step 344, the microprocessor 220 removes a signal from the evaporator fan 134 to turn off the evaporator fan 134. After step 344, the method advances to step 346.

At step 346, the microprocessor makes a determination as to whether the flag1 equals "false"; flag2 equals "false"; and flag4 equals "false." If the value of step 346 equals "yes", the method advances to step 348. Otherwise, the method advances to step 360.

At step 348, the microprocessor 220 removes a signal from the compressor 194 to turn off the compressor 194. After step 348, the method advances to step 350.

At step 350, the microprocessor 220 removes a signal from the condenser fan 192 to turn off the condenser fan 192. After step 350, the method advances to step 360.

At step 360, the microprocessor 220 calculates a second temperature difference value utilizing the following equation: second temperature difference value = first signal - second signal. After step 360, the method advances to step 362.

At step 362, the microprocessor makes a determination as to whether the second temperature difference value is greater than a threshold difference value. If the value of step 362 equals "yes", the method advances to step 364. Otherwise, the method advances to step 380.

At step 364, the microprocessor 220 sets flag4 equal to "true." After step 364, the method advances to step 366.

At step 366, the microprocessor 220 generates a signal to turn on the compressor 194 to recirculate refrigerant through the evaporator 136, the evaporator 138, and the condenser 190. After step 366, the method advances to step 368.

At step 368, the microprocessor 220 generates a signal to turn on the evaporator fan 132 to recirculate air in the first closed flow path loop 240 within the enclosed portion 180. After step 368, the method advances to step 370.

At step 370, the evaporator 136 extracts heat energy from the air in the first closed flow path loop 240 to the refrigerant flowing through the evaporator 136 to reduce a temperature of the battery module 24 in the enclosed portion 180. After step 370, the method advances to step 372.

At step 372, the microprocessor 220 generates a signal to turn on the condenser fan 192 to urge air past the condenser 190 in the enclosed portion 182 of the housing 130 that further induces the condenser 190 to dissipate heat energy from the refrigerant flowing from the evaporator 136. After step 372, the method returns to step 262.

Referring again to step 362, if the value of step 362 equals "no", the method advances to step 380. At step 380, the microprocessor 220 sets flag4 equal to "false." After step 380, the method advances to step 382.

At step 382, the microprocessor 220 makes a determination as to whether flag1 equals "false." After step 382, the method advances to step 384.

At step 384, the microprocessor 220 removes a signal from the evaporator fan 132 to turn off the evaporator fan 132. After step 384, the method advances to step 386.

At step 386, the microprocessor 220 makes a determination as to whether flag1 equals "false"; and flag2 equals "false"; and flag3 equals "false." If the value of step 386 equals "yes", the method advances to step 388. Otherwise, the method returns to step 262.

At step 388, the microprocessor 220 removes a signal from the compressor 194 to turn off the compressor 194. After step 388, the method advances to step 390.

At step 390, the microprocessor 220 removes a signal from the condenser fan 192 to turn off the condenser fan 192. After step 390, the method returns to step 262.

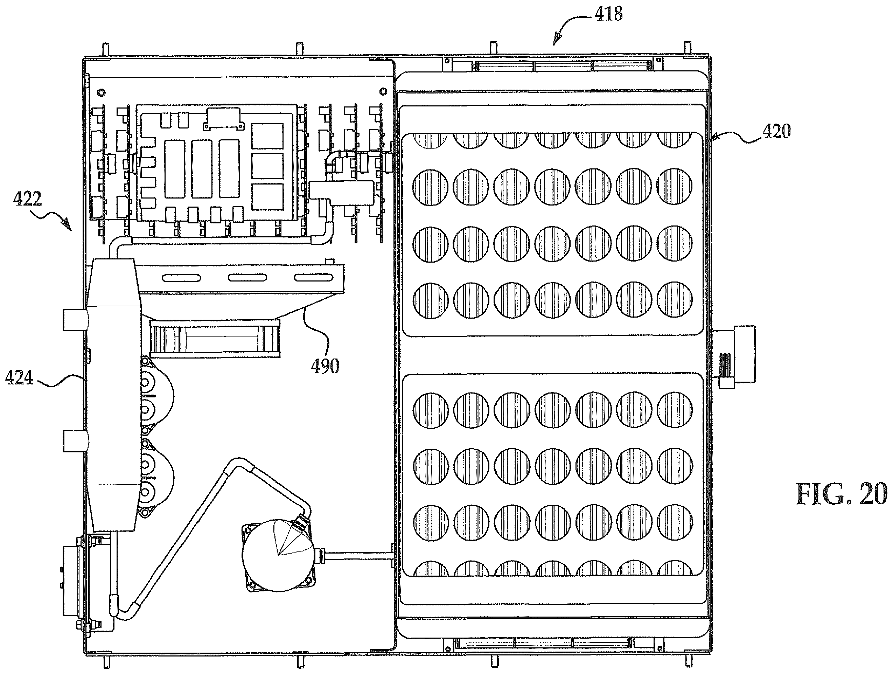

Referring to Figure 20, a power generation system 418 for outputting electrical power in accordance with another exemplary embodiment is illustrated. The power generation system 418 includes a battery system 420 and a cooling system 422. The battery system 420 has a substantially similar configuration as the battery system 20. The cooling system 422 has a cooling coil 424 and a condenser 490, and further includes the other components of the cooling system 22 described above except for the condenser fan 192 and the condenser 190. The cooling coil 424 is utilized to cool the refrigerant and replaces the condenser fan 192 utilized in the system 10. The condenser 490 replaces the condenser 190 utilized in the cooling system 22. In operation, the cooling coil 424 receives a liquid from an external liquid source which cools the refrigerant flowing therethrough. It should be noted that the operation of the cooling system 422 is similar to the operation of the cooling system 22 described above, except that the cooling coil 424 is utilized instead of a condenser fan to cool the refrigerant.

The cooling system for a battery system and the method for cooling the battery system provide a substantial advantage over other cooling systems and methods. In particular, the cooling system and method provide a technical effect of recirculating air in a closed flow path loop within a housing of the cooling system to reduce a temperature level of the battery modules in the battery system. The closed flow path loop is within an airtight enclosed portion of the housing that allows the system and the method to utilize less power and have a smaller size than other systems and methods.

While the invention has been described with reference to exemplary embodiments, it will be understood by those skilled in the art that various changes may be made and equivalents may be substituted for elements thereof within the scope of the appended claims. Therefore, it is intended that the invention not be limited to the particular embodiment disclosed for carrying out this invention, but that the invention will include all embodiments falling within the scope of the appended claims. Moreover, the use of the terms, first, second, etc. are used to distinguish one element from another. Further, the use of the terms a, an, etc. do not denote a limitation of quantity, but rather denote the presence of at least one of the referenced items

## Claims

1. A battery module cooling system (22), comprising:
a housing (130) having a first enclosed portion (180) and a second enclosed portion (182), the first enclosed portion (180) configured to receive a first battery module (24) therein;
a first evaporator (136) disposed in the first enclosed portion (180);
a first evaporator fan (132) disposed proximate to the first evaporator (136) in the first enclosed portion (180) configured to recirculate air in a first closed flow path loop (240) within the first enclosed portion (180), the first evaporator (136) configured to extract heat energy from the air in the first closed flow path loop (240) to reduce a temperature level of the first battery module (24);
a condenser (190) disposed in the second enclosed portion (182) and fluidly coupled to the first evaporator (136), the condenser (190) configured to receive heat energy in a refrigerant from the first evaporator (132) and to dissipate the heat energy;
a compressor (194) disposed in the second enclosed portion (182) that recirculates the refrigerant through the first evaporator (132) and the condenser (190);
and **characterized by** further comprising:
a first flow balancing baffle (140) disposed proximate to the first evaporator fan (132), the first flow balancing baffle (140) being substantially u-shaped with a plurality of apertures extending therethrough; and
a first flow balancing tray (160) disposed on the first flow balancing baffle (140),
a second flow balancing tray (162) disposed on a top surface of the first battery module (24), and
wherein the first flow balancing tray (160) and the second flow balancing tray (162) have a plurality of apertures extending therethrough.

2. The battery module cooling system of claim 1, wherein the first closed flow path loop (240) comprises a flow path through the first evaporator fan (132) and past the first evaporator (136) and then through air flow channels in the first battery module (24) and then back through the first evaporator fan (132).

3. The battery module cooling system of claim 1, further comprising a first temperature sensor (210) generating a first signal indicating, in use, a temperature level of the first battery module (24).

4. The battery module cooling system of claim 3, further comprising:
a condenser fan (192) disposed in the second enclosed portion (182);
a microprocessor (220) operably coupled to the first temperature sensor (210) that receives the first signal, the microprocessor (220) configured to generate a second signal to induce the compressor (194) to recirculate the refrigerant through the first evaporator (132) and the condenser (190) to cool the first battery module (24) when the first signal indicates the temperature level of the first battery module (24) is greater than a threshold temperature level;
the microprocessor (220) further configured to generate a third signal to induce the first evaporator fan (132) to recirculate air in the first closed flow path loop (240) within the first enclosed portion (180) when the first signal indicates the temperature level of the first battery module (24) is greater than the threshold temperature level; and
the microprocessor (220) further configured to generate a fourth signal to induce the condenser fan (192) to urge air past the condenser (190) to induce the condenser (190) to dissipate heat energy when the first signal indicates the temperature level of the first battery module (24) is greater than the threshold temperature level.

5. The battery module cooling system of claim 1, further comprising:
a second evaporator (138) disposed in the first enclosed portion (180), the second evaporator (138) fluidly coupled to the condenser (190);
a second evaporator fan (134) disposed proximate to the second evaporator (138) in the first enclosed portion (180), the second evaporator fan (134) configured to recirculate air in a second closed flow path loop (242) within the first enclosed portion (180), the second evaporator (138) configured to extract heat energy from the air in the second closed flow path loop (242) to reduce a temperature level of a second battery module (26) disposed in the first enclosed portion (180);
the condenser (190) further fluidly coupled to the second evaporator (138), the condenser (190) further configured to receive heat energy in refrigerant from the first and second evaporators (136, 138) and to dissipate the heat energy;
the compressor (194) further configured to recirculate the refrigerant through the first and second evaporators (136, 138) and the condenser (190); and
a second flow balancing baffle (142) disposed proximate to the second evaporator fan (134), the first flow balancing baffle (140) being substantially u-shaped with a plurality of apertures extending there through.

6. The battery module cooling system of claim 5, wherein the second closed flow path loop (242) comprises a flow path through the second evaporator fan (134) and past the second evaporator (138) and then through air flow channels in the second battery module (26) and then back through the second evaporator fan (134).

7. The battery module cooling system of claim 5, further comprising:
a first temperature sensor (210) generating a first signal indicating, in use, a temperature level of the first battery module (24), and
a second temperature sensor (212) generating a second signal indicating, in use, a temperature level of the second battery module (26).

8. The battery module cooling system of claim 7, further comprising:
a condenser fan (192) disposed in the second enclosed portion (182);
a microprocessor (220) operably coupled to the first and second temperature sensors (210, 212) that receives the first and second signals, respectively;
the microprocessor (220) configured to determine a first temperature difference value by subtracting the first signal from the second signal;
the microprocessor (220) further configured to generate a third signal to induce the compressor (194) to recirculate the refrigerant through the first evaporator (136), the second evaporator (138), and the condenser (190) to cool the second battery module (26) when the first temperature difference value is greater than a threshold difference value;
the microprocessor (220) further configured to generate a fourth signal to induce the second evaporator fan (134) to recirculate air in the second closed flow path loop (242) within the first enclosed portion (180) when the first temperature difference value is greater than the threshold difference value; and
the microprocessor (220) further configured to generate a fifth signal to induce the condenser fan (192) to urge air past the condenser (190) to induce the condenser (190) to dissipate heat energy in the refrigerant when the first temperature difference value is greater than the threshold difference value.

9. The battery module cooling system of claim 7, further comprising:
a condenser fan (192) disposed in the second enclosed portion (182);
a microprocessor (220) operably coupled to the first and second temperature sensors (210, 212) that receives the first and second signals, respectively;
the microprocessor (220) configured to determine a first temperature difference value by subtracting the second signal from the first signal;
the microprocessor (220) further configured to generate a third signal to induce the compressor (194) to recirculate the refrigerant through the first evaporator (136), the second evaporator (138), and the condenser (190) to cool the first battery module (24) when the first temperature difference value is greater than a threshold difference value;
the microprocessor (220) further configured to generate a fourth signal to induce the first evaporator fan (132) to recirculate air in the first closed flow path loop (240) within the first enclosed portion (180) when the first temperature difference value is greater than the threshold difference value; and
the microprocessor (220) further configured to generate a fifth signal to induce the condenser fan (192) to urge air past the condenser (190) to induce the condenser (190) to dissipate the heat energy in the refrigerant when the first temperature difference value is greater than the threshold difference value.

10. The battery module cooling system of claim 1, further comprising a cooling coil (424) that receives a liquid therein to remove heat energy from the refrigerant in the condenser (190).

11. The battery module cooling system of claim 1, wherein the first enclosed portion (180) is an airtight enclosed portion.

12. A method for cooling a battery system utilizing the battery module cooling system as defined in claim 1, the battery module cooling system having a housing (130), a first evaporator (136), a first evaporator fan (132), and a condenser (190), the housing (130) having a first enclosed portion (180) and a second enclosed portion (182), the first enclosed portion (180) configured to receive a first battery module (24) therein, the method comprising:
recirculating air in a first closed flow path loop (240) within the first enclosed portion (180) utilizing the first evaporator fan (132), the first evaporator (136) configured to extract heat energy from the air in the first closed flow path loop (240) to reduce a temperature level of the first battery module (24) in the first enclosed portion (180) of the housing (130);
receiving heat energy in a refrigerant from the first evaporator (136) in a condenser (190) disposed in the second enclosed portion (182) of the housing (130) and dissipating the heat energy utilizing the condenser (190); and
recirculating the refrigerant through the first evaporator (132) and the condenser (190) utilizing a compressor (194) disposed in the second enclosed portion (182).

13. The method of claim 12, wherein the battery module cooling system further has a condenser fan (192), a temperature sensor (210), and a microprocessor (220), the method further comprising:
generating a first signal indicative of a temperature level of the first battery module (24) utilizing a temperature sensor (210);
generating a second signal to induce the compressor (194) to recirculate the refrigerant through the first evaporator (132) and the condenser (190) to cool the first battery module (24) utilizing the microprocessor (220) when the first signal indicates the temperature level of the first battery module (24) is greater than a threshold temperature level;
generating a third signal to induce the first evaporator fan (132) to recirculate air in the first closed flow path loop (240) within the first enclosed portion (180) when the first signal indicates the temperature level of the first battery module (24) is greater than the threshold temperature level; and
generating a fourth signal to induce the condenser fan (192) to urge air past the condenser (190) to induce the condenser (190) to dissipate heat energy when the first signal indicates the temperature level of the first battery module (24) is greater than the threshold temperature level.

14. The method of claim 12, wherein the battery module cooling system further comprises a second evaporator (138) and a second evaporator fan (134) disposed in the first enclosed portion (180), the second evaporator (138) fluidly coupled to the condenser (190), the first enclosed portion (180) configured to receive a second battery module (26) therein, further comprising:
recirculating air in a second closed flow path loop (242) within the first enclosed portion (180) utilizing the second evaporator fan (134), the second evaporator (138) configured to extract heat energy from the air in the second closed flow path loop (242) to reduce a temperature level of the second battery module (26) in the first enclosed portion (180);
receiving heat energy in refrigerant from the first and second evaporators (136, 138) in the condenser (190) disposed in the second enclosed portion (182) and dissipating the heat energy in the refrigerant utilizing the condenser (190); and
recirculating the refrigerant through the first evaporator (136), the second evaporator (138), and the condenser (190) utilizing the compressor (194) disposed in the second enclosed portion (182).

15. The method of claim 12, wherein the first enclosed portion (180) is an airtight enclosed portion.

## Patentansprüche

1. Kühlsystem für ein Batteriemodul (22), umfassend:
ein Gehäuse (130), das einen ersten eingeschlossenen Abschnitt (180) und einen zweiten eingeschlossenen Abschnitt (182) aufweist, wobei der erste eingeschlossene Abschnitt (180) konfiguriert ist, um ein erstes Batteriemodul (24) darin aufzunehmen;
einen ersten Verdampfer (136), der im ersten eingeschlossenen Abschnitt (180) angeordnet ist;
einen ersten Verdampferlüfter (132), der nah am ersten Verdampfer (136) im ersten eingeschlossenen Abschnitt (180) liegend angeordnet ist, der konfiguriert ist, um Luft in einer ersten geschlossenen Strömungswegschleife (240) innerhalb des ersten eingeschlossenen Abschnitts (180) zu rezirkulieren, wobei der erste Verdampfer (136) konfiguriert ist, um Wärmeenergie aus der Luft in der ersten geschlossenen Strömungswegschleife (240) zu entnehmen, um ein Temperaturniveau des ersten Batteriemoduls (24) zu senken;
einen Kondensator (190), der im zweiten eingeschlossenen Abschnitt (182) angeordnet und fluidisch mit dem ersten Verdampfer (136) gekuppelt ist, wobei der Kondensator (190) konfiguriert ist, um Wärmeenergie in einem Kühlmittel vom ersten Verdampfer (132) zu empfangen und die Wärmeenergie abzuführen;
einen Kompressor (194), der im zweiten eingeschlossenen Abschnitt (182) angeordnet ist, der das Kühlmittel durch den ersten Verdampfer (132) und den Kondensator (190) rezirkuliert;
und **dadurch gekennzeichnet, dass** es weiter umfasst:
ein erstes Strömungsausgleichsleitblech (140), das nah am ersten Verdampferlüfter (132) liegend angeordnet ist, wobei das erste Strömungsausgleichsleitblech (140) im Wesentlichen u-förmig mit einer Vielzahl von sich dadurch erstreckenden Öffnungen ist; und
eine erste Strömungsausgleichswanne (160), die auf dem ersten Strömungsausgleichsleitblech (140) angeordnet ist,
eine zweite Strömungsausgleichswanne (162), die auf einer oberen Fläche des ersten Batteriemoduls (24) angeordnet ist, und
wobei die erste Strömungsausgleichswanne (160) und die zweite Strömungsausgleichswanne (162) eine Vielzahl von sich dadurch erstreckenden Öffnungen aufweisen.

2. Kühlsystem für ein Batteriemodul nach Anspruch 1, wobei die erste geschlossene Strömungswegschleife (240) einen Strömungsweg durch den ersten Verdampferlüfter (132) und hinter den ersten Verdampfer (136) und dann durch Luftströmungskanäle im ersten Batteriemodul (24) und dann zurück durch den ersten Verdampferlüfter (132) umfasst.

3. Kühlsystem für ein Batteriemodul nach Anspruch 1, weiter umfassend einen ersten Temperaturfühler (210), der ein erstes Signal erzeugt, das in Verwendung ein Temperaturniveau des ersten Batteriemoduls (24) anzeigt.

4. Kühlsystem für ein Batteriemodul nach Anspruch 3, weiter umfassend:
einen Kondensatorlüfter (192), der im zweiten eingeschlossenen Abschnitt (182) angeordnet ist;
einen Mikroprozessor (220), der funktionell mit dem ersten Temperaturfühler (210) gekuppelt ist, der das erste Signal empfängt, wobei der Mikroprozessor (220) konfiguriert ist, um ein zweite Signal zu erzeugen, um den Kompressor (194) zu veranlassen, das Kühlmittel durch den ersten Verdampfer (132) zu rezirkulieren, damit der Kondensator (190) das erste Batteriemodul (24) kühlt, wenn das erste Signal anzeigt, dass das Temperaturniveau des ersten Batteriemoduls (24) höher ist als ein Schwellwert für das Temperaturniveau;
wobei der Mikroprozessor (220) weiter konfiguriert ist, um ein drittes Signal zu erzeugen, um den ersten Verdampferlüfter (132) zu veranlassen, Luft in der ersten geschlossenen Strömungswegschleife (240) innerhalb des ersten eingeschlossenen Abschnitts (180) zu rezirkulieren, wenn das erste Signal anzeigt, dass das Temperaturniveau des ersten Batteriemoduls (24) höher ist als der Schwellwert für das Temperaturniveau; und
der Mikroprozessor (220) weiter konfiguriert ist, um ein viertes Signal zu erzeugen, um den Kondensatorlüfter (192) zu veranlassen, Luft hinter den Kondensator (190) zu drängen, um den Kondensator (190) zu veranlassen, Wärmeenergie abzuführen, wenn das erste Signal anzeigt, dass das Temperaturniveau des ersten Batteriemoduls (24) höher ist als der Schwellwert für das Temperaturniveau.

5. Kühlsystem für ein Batteriemodul nach Anspruch 1, weiter umfassend:
einen zweiten Verdampfer (138), der im ersten eingeschlossenen Abschnitt (180) angeordnet ist, wobei der zweite Verdampfer (138) fluidisch mit dem Kondensator (190) gekuppelt ist;
einen zweiten Verdampferlüfter (134), der nah am zweiten Verdampfer (138) im ersten eingeschlossenen Abschnitt (180) liegend angeordnet ist, wobei der zweite Verdampferlüfter (134) konfiguriert ist, um Luft in einer zweiten Strömungswegschleife (242) innerhalb des ersten eingeschlossenen Abschnitts (180) zu rezirkulieren, wobei der zweite Verdampfer (138) konfiguriert ist, um Wärmeenergie aus der Luft in der zweiten geschlossenen Strömungswegschleife (242) zu entnehmen, um ein Temperaturniveau eines zweiten Batteriemoduls (26) zu senken, das im ersten eingeschlossenen Abschnitt (180) angeordnet ist;
wobei der Kondensator (190) weiter fluidisch mit dem zweiten Verdampfer (138) gekuppelt ist, wobei der Kondensator (190) weiter konfiguriert ist, um Wärmeenergie im Kühlmittel vom ersten und zweiten Verdampfer (136, 138) zu erhalten und die Wärmeenergie abzuleiten;
wobei der Kompressor (194) weiter konfiguriert ist, um das Kühlmittel durch den ersten und den zweiten Verdampfer (136, 138) und den Kondensator (190) zu rezirkulieren; und
ein zweites Strömungsausgleichsleitblech (142), das nah am zweiten Verdampferlüfter (134) liegend angeordnet ist, wobei das erste Strömungsausgleichsleitblech (140) im Wesentlichen u-förmig mit einer Vielzahl von sich dadurch erstreckenden Öffnungen ist.

6. Kühlsystem für ein Batteriemodul nach Anspruch 5, wobei die zweite geschlossene Strömungswegschleife (242) einen Strömungsweg durch den zweiten Verdampferlüfter (134) und hinter den zweiten Verdampfer (138) und dann durch Luftströmungskanäle im zweiten Batteriemodul (26) und dann zurück durch den zweiten Verdampferlüfter (134) umfasst.

7. Kühlsystem für ein Batteriemodul nach Anspruch 5, weiter umfassend:
einen ersten Temperaturfühler (210), der ein erstes Signal erzeugt, das in Verwendung ein Temperaturniveau des ersten Batteriemoduls (24) anzeigt, und
einen zweiten Temperaturfühler (212), der ein zweites Signal erzeugt, das in Verwendung ein Temperaturniveau des zweiten Batteriemoduls (26) anzeigt.

8. Kühlsystem für ein Batteriemodul nach Anspruch 7, weiter umfassend:
einen Kondensatorlüfter (192), der im zweiten eingeschlossenen Abschnitt (182) angeordnet ist;
einen funktionell mit dem ersten und zweiten Temperaturfühler (210, 212) gekuppelten Mikroprozessor (220), der das erste bzw. das zweite Signal empfängt;
wobei der Mikroprozessor (220) konfiguriert ist, um einen ersten Temperaturdifferenzwert durch Abziehen des ersten Signals vom zweiten Signal zu bestimmen;
wobei der Mikroprozessor (220) weiter konfiguriert ist, um ein drittes Signal zu erzeugen, um den Kompressor (194) zu veranlassen, das Kühlmittel durch den ersten Verdampfer (136), den zweiten Verdampfer (138) und den Kondensator (190) zu rezirkulieren, um das zweite Batteriemodul (26) zu kühlen, wenn die erste Temperaturdifferenzwert höher ist als ein Schwellwert für den Differenzwert;
wobei der Mikroprozessor (220) weiter konfiguriert ist, um ein viertes Signal zu erzeugen, um den zweiten Verdampferlüfter (134) zu veranlassen, Luft in der zweiten geschlossenen Strömungswegschleife (242) innerhalb des ersten eingeschlossenen Abschnitts (180) zu rezirkulieren, wenn der erste Temperaturdifferenzwert höher ist als der Schwellwert für den Differenzwert; und
wobei der Mikroprozessor (220) weiter konfiguriert ist, um ein fünftes Signal zu erzeugen, um den Kondensatorlüfter (192) zu veranlassen, Luft hinter den Kondensator (190) zu drängen, um den Kondensator (190) zu veranlassen, Wärmeenergie in das Kühlmittel abzuführen, wenn der erste Temperaturdifferenzwert höher ist als der Schwellwert für den Differenzwert.

9. Kühlsystem für ein Batteriemodul nach Anspruch 7, weiter umfassend:
einen Kondensatorlüfter (192), der im zweiten eingeschlossenen Abschnitt (182) angeordnet ist;
einen funktionell mit dem ersten und zweiten Temperaturfühler (210, 212) gekuppelten Mikroprozessor (220), der das erste bzw. das zweite Signal empfängt;
wobei der Mikroprozessor (220) konfiguriert ist, um einen ersten Temperaturdifferenzwert durch Abziehen des zweiten Signals vom ersten Signal zu bestimmen;
wobei der Mikroprozessor (220) weiter konfiguriert ist, um ein drittes Signal zu erzeugen, um den Kompressor (194) zu veranlassen, das Kühlmittel durch den ersten Verdampfer (136), den zweiten Verdampfer (138) und den Kondensator (190) zu rezirkulieren, um das erste Batteriemodul (24) zu kühlen, wenn die erste Temperaturdifferenzwert höher ist als ein Schwellwert für den Differenzwert;
wobei der Mikroprozessor (220) weiter konfiguriert ist, um ein viertes Signal zu erzeugen, um den ersten Verdampferlüfter (132) zu veranlassen, Luft in der ersten geschlossenen Strömungswegschleife (240) innerhalb des ersten eingeschlossenen Abschnitts (180) zu rezirkulieren, wenn der erste Temperaturdifferenzwert höher ist als der Schwellwert für den Differenzwert; und
wobei der Mikroprozessor (220) weiter konfiguriert ist, um ein fünftes Signal zu erzeugen, um den Kondensatorlüfter (192) zu veranlassen, Luft hinter den Kondensator (190) zu drängen, um den Kondensator (190) zu veranlassen, die Wärmeenergie in das Kühlmittel abzuführen, wenn der erste Temperaturdifferenzwert höher ist als der Schwellwert für den Differenzwert.

10. Kühlsystem für ein Batteriemodul nach Anspruch 1, weiter umfassend eine Kühlschlange (424), die darin eine Flüssigkeit empfängt, um Wärmeenergie aus dem Kühlmittel im Kondensator (190) zu entfernen.

11. Kühlsystem für ein Batteriemodul nach Anspruch 1, wobei der erste eingeschlossene Abschnitt (180) ein luftdichter eingeschlossener Abschnitt ist.

12. Verfahren zum Kühlen eines Batteriesystems unter Verwendung eines Kühlsystems für ein Batteriemodul nach Anspruch 1, wobei das Kühlsystem für ein Batteriemodul ein Gehäuse (130), einen ersten Verdampfer (136), einen ersten Verdampferlüfter (132) und einen Kondensator (190) aufweist, wobei das Gehäuse (130) einen ersten eingeschlossenen Abschnitt (180) und einen zweiten eingeschlossenen Abschnitt (182) aufweist, wobei der erste eingeschlossene Abschnitt (180) konfiguriert ist, um ein erstes Batteriemodul (24) darin aufzunehmen, wobei das Verfahren umfasst:
Rezirkulieren von Luft in einer ersten geschlossenen Strömungswegschleife (240) innerhalb des ersten eingeschlossenen Abschnitts (180) unter Verwendung des ersten Verdampferlüfters (132), wobei der erste Verdampfer (136) konfiguriert ist, um Wärmeenergie aus der Luft in der ersten geschlossenen Strömungswegschleife (240) zu entnehmen, um ein Temperaturniveau des ersten Batteriemoduls (24) im ersten eingeschlossenen Abschnitt (180) des Gehäuses (130) zu senken;
Empfangen von Wärmeenergie in einem Kühlmittel vom ersten Verdampfer (136) in einem Kondensator (190), der im zweiten eingeschlossenen Abschnitt (182) des Gehäuses (130) angeordnet ist, und Ableiten der Wärmeenergie unter Verwendung des Kondensators (190); und
Rezirkulieren des Kühlmittels durch den ersten Verdampfer (132) und den Kondensator (190) unter Verwendung eines Kompressors (194), der im zweiten eingeschlossenen Abschnitt (182) angeordnet ist.

13. Verfahren nach Anspruch 12, wobei das Kühlsystem für ein Batteriemodul weiter einen Kondensatorlüfter (192), einen Temperaturfühler (210) und einen Mikroprozessor (220) aufweist, wobei das Verfahren weiter umfasst:
Erzeugen eines ersten Signals, das ein Temperaturniveau des ersten Batteriemoduls (24) unter Verwendung eines Temperaturfühlers (210) anzeigt;
Erzeugen eines zweiten Signals, um den Kompressor (194) zu veranlassen, das Kühlmittel durch den ersten Verdampfer (132) und den Kondensator (190) zu rezirkulieren, um das erste Batteriemodul (24) unter Verwendung des Mikroprozessors (220) zu kühlen, wenn das erste Signal anzeigt, dass das Temperaturniveau des ersten Batteriemoduls (24) höher ist als ein Schwellwert für das Temperaturniveau;
Erzeugen eines dritten Signals, um den ersten Verdampferlüfter (132) zu veranlassen, Luft in der ersten geschlossenen Strömungswegschleife (240) innerhalb des ersten eingeschlossenen Abschnitts (180) zu rezirkulieren, wenn das erste Signal anzeigt, dass das Temperaturniveau des ersten Batteriemoduls (24) höher ist als der Schwellwert für das Temperaturniveau; und
Erzeugen eines vierten Signals, um den Kondensatorlüfter (192) zu veranlassen, Luft hinter den Kondensator (190) zu drängen, um den Kondensator (190) zu veranlassen, Wärmeenergie abzuführen, wenn das erste Signal anzeigt, dass das Temperaturniveau des ersten Batteriemoduls (24) höher ist als der Schwellwert für das Temperaturniveau.

14. Verfahren nach Anspruch 12, wobei das Kühlsystem für ein Batteriemodul weiter einen zweiten Verdampfer (138) und einen zweiten Verdampferlüfter (134) umfasst, der im ersten eingeschlossenen Abschnitt (180) angeordnet ist, wobei der zweite Verdampfer (138) fluidisch mit dem Kondensator (190) gekuppelt ist, wobei der erste eingeschlossene Abschnitt (180) konfiguriert ist, um ein zweites Batteriemodul (26) darin aufzunehmen, weiter umfassend:
Rezirkulieren von Luft in einer zweiten geschlossenen Strömungswegschleife (242) innerhalb des zweiten eingeschlossenen Abschnitts (180) unter Verwendung des zweiten Verdampferlüfters (134), wobei der zweiten Verdampfer (138) konfiguriert ist, um Wärmeenergie aus der Luft in der zweiten geschlossenen Strömungswegschleife (242) zu entnehmen, um ein Temperaturniveau des ersten Batteriemoduls (26) im ersten eingeschlossenen Abschnitt (180) zu senken;
Empfangen von Wärmeenergie in einem Kühlmittel vom ersten und zweiten Verdampfer (136, 138) im Kondensator (190), der im zweiten eingeschlossenen Abschnitt (182) angeordnet ist, und Ableiten der Wärmeenergie unter Verwendung des Kondensators (190); und
Rezirkulieren des Kühlmittels durch den ersten Verdampfer (136) und den zweiten Kondensator (138) und den Kondensator (190) unter Verwendung des Kompressors (194), der im zweiten eingeschlossenen Abschnitt (182) angeordnet ist.

15. Verfahren nach Anspruch 12, wobei der erste eingeschlossene Abschnitt (180) ein luftdichter eingeschlossener Abschnitt ist.

## Revendications

1. Système de refroidissement de module de batterie (22) comprenant :
un boîtier (130) ayant une première partie fermée (180) et une seconde partie fermée (182), la première partie fermée (180) étant configurée pour y recevoir un premier module de batterie (24) ;
un premier évaporateur (136) disposé dans la première partie fermée (180) ;
un ventilateur de premier évaporateur (132) disposé à proximité du premier évaporateur (136) dans la première partie fermée (180) et configuré pour faire recirculer de l'air dans une première boucle de trajet d'écoulement fermée (240) dans la première partie fermée (180), le premier évaporateur (136) étant configuré pour extraire de l'énergie thermique de l'air dans la première boucle de trajet d'écoulement fermée (240) afin de réduire un niveau de température du premier module de batterie (24) ;
un condenseur (190) disposé dans la seconde partie fermée (182) et couplé en mode fluidique au premier évaporateur (136), le condenseur (190) étant configuré pour recevoir de l'énergie thermique dans un réfrigérant venant du premier évaporateur (132) et pour dissiper l'énergie thermique ;
un compresseur (194) disposé dans la seconde partie fermée (182) qui fait recirculer le réfrigérant à travers le premier évaporateur (132) et le condenseur (190) ;
et **caractérisé en ce qu'**il comprend en outre :
un premier déflecteur d'équilibrage d'écoulement (140) disposée à proximité du ventilateur de premier évaporateur (132), le premier déflecteur d'équilibrage d'écoulement (140) étant sensiblement en forme de U avec une pluralité d'ouvertures qui le traversent ; et
un premier plateau d'équilibrage d'écoulement (160) disposé sur le premier déflecteur d'équilibrage d'écoulement (140),
un second plateau d'équilibrage d'écoulement (162) disposé sur une surface supérieure du premier module de batterie (24), et
dans lequel le premier plateau d'équilibrage d'écoulement (160) et le second plateau d'équilibrage d'écoulement (162) ont une pluralité d'ouvertures qui les traversent.

2. Système de refroidissement de module de batterie selon la revendication 1, dans lequel la première boucle de trajet d'écoulement fermée (240) comprend un trajet d'écoulement à travers le ventilateur de premier évaporateur (132) et au-delà du premier évaporateur (136), puis, à travers des canaux d'écoulement d'air dans le premier module de batterie (24), puis de retour à travers le ventilateur de premier évaporateur (132).

3. Système de refroidissement de module de batterie selon la revendication 1, comprenant en outre un premier capteur de température (210) générant un premier signal indiquant, en service, un niveau de température du premier module de batterie (24).

4. Système de refroidissement de module de batterie selon la revendication3, comprenant en outre :
un ventilateur de condenseur (192) disposé dans la seconde partie fermée (182) ;
un microprocesseur (220) couplé en service au premier capteur de température (210) qui reçoit le premier signal, le microprocesseur (220) étant configuré pour générer un deuxième signal pour induire le compresseur (194) à refaire circuler le réfrigérant à travers le premier évaporateur (132) et le condenseur (190) à refroidir le premier module de batterie (24) lorsque le premier signal indique que le niveau de température du premier module de batterie (24) est supérieur à un niveau de température de seuil ;
le microprocesseur (220) étant configuré en outre pour générer un troisième signal pour induire le ventilateur de premier évaporateur (132) à refaire circuler l'air dans la première boucle de trajet d'écoulement fermée (240) au sein de la première partie fermée (180) lorsque le premier signal indique que le niveau de température du premier module de batterie (24) est supérieur au niveau de température de seuil ; et
le microprocesseur (220) étant configuré en outre pour générer un quatrième signal pour induire le ventilateur de condenseur (192) à refouler de l'air au-delà du condenseur (190) pour induire le condenseur (190) à dissiper de l'énergie thermique lorsque le premier signal indique que le niveau de température du premier module de batterie (24) est supérieur au niveau de température de seuil.

5. Système de refroidissement de module de batterie selon la revendication 1, comprenant en outre :
un second évaporateur (138) disposé dans la première partie fermée (180), le second évaporateur (138) étant couplé en mode fluidique au condenseur (190) ;
un ventilateur de second évaporateur (134) disposé à proximité du second évaporateur (138) dans la première partie fermée (180), le ventilateur de second évaporateur (134) étant configuré pour refaire circuler de l'air dans une seconde boucle de trajet d'écoulement fermée (242) au sein de la première partie fermée (180), le second évaporateur (138) étant configuré pour extraire de l'énergie thermique de l'air dans la seconde boucle de trajet d'écoulement fermée (242) afin de réduire un niveau de température d'un second module de batterie (26) disposé dans la première partie fermée (180) ;
le condenseur (190) étant couplé en outre en mode fluidique au second évaporateur (138), le condenseur (190) étant en outre configuré pour recevoir de l'énergie thermique dans le réfrigérant des premier et second évaporateurs (136, 138) et pour dissiper l'énergie thermique ;
le compresseur (194) étant en outre configuré pour refaire circuler le réfrigérant à travers les premier et second évaporateurs (136, 138) et le condenseur (190) ; et
un second déflecteur d'équilibrage d'écoulement (142) disposée à proximité du ventilateur de second évaporateur (134), le premier déflecteur d'équilibrage d'écoulement (140) étant sensiblement en forme de U avec une pluralité d'ouvertures qui le traversent.

6. Système de refroidissement de module de batterie selon la revendication 5, dans lequel la seconde boucle de trajet d'écoulement fermée (242) comprend un trajet d'écoulement à travers le ventilateur de second évaporateur (134) et au-delà du second évaporateur (138), puis à travers des canaux d'écoulement d'air dans le second module de batterie (26) puis de retour à travers le ventilateur de second évaporateur (134).

7. Système de refroidissement de module de batterie selon la revendication 5, comprenant en outre :
un premier capteur de température (210) générant un premier signal indiquant, en service, un niveau de température du premier module de batterie (24), et
un second capteur de température (212) générant un deuxième signal indiquant, en service, un niveau de température du second module de batterie (26).

8. Système de refroidissement de module de batterie selon la revendication 7, comprenant en outre :
un ventilateur de condenseur (192) disposé dans la seconde partie fermée (182) ;
un microprocesseur (220) couplé en service aux premier et second capteurs de température (210, 212) qui reçoit les premier et deuxième signaux, respectivement ;
le microprocesseur (220) étant configuré pour déterminer une première valeur de différence de température en soustrayant le premier signal du deuxième signal ;
le microprocesseur (220) étant en outre configuré pour générer un troisième signal pour induire le compresseur (194) à refaire circuler le réfrigérant à travers le premier évaporateur (136), le second évaporateur (138) et le condenseur (190) pour refroidir le second module de batterie (26) lorsque la première valeur de différence de température est supérieure à une valeur de différence de seuil ;
le microprocesseur (220) étant configuré en outre pour générer un quatrième signal pour induire le ventilateur de second évaporateur (134) à refaire circuler l'air dans la seconde boucle de trajet d'écoulement fermée (242) au sein de la première partie fermée (180) lorsque la première valeur de différence de température est supérieure à la valeur de différence de seuil ; et
le microprocesseur (220) étant en outre configuré pour générer un cinquième signal pour induire le ventilateur de condenseur (192) à purger l'air passant par le condenseur (190) pour induire le condenseur (190) à dissiper l'énergie thermique dans le réfrigérant lorsque la première valeur de différence de température est supérieure à la valeur de différence de seuil.

9. Système de refroidissement de module de batterie selon la revendication 7, comprenant en outre :
un ventilateur de condenseur (192) disposé dans la seconde partie fermée (182) ;
un microprocesseur (220) couplé en service aux premier et second capteurs de température (210, 212) qui reçoivent les premier et deuxième signaux, respectivement ;
le microprocesseur (220) étant configuré pour déterminer une première valeur de différence de température en soustrayant le premier signal du deuxième signal ;
le microprocesseur (220) étant en outre configuré pour générer un troisième signal afin d'induire le compresseur (194) à refaire circuler le réfrigérant à travers le premier évaporateur (136), le second évaporateur (138) et le condenseur (190) pour refroidir le premier module de batterie (24) lorsque la première valeur de différence de température est supérieure à une valeur de différence de seuil ;
le microprocesseur (220) étant en outre configuré pour générer un quatrième signal pour induire le ventilateur de premier évaporateur (132) à refaire circuler l'air dans la première boucle de trajet d'écoulement fermée (240) au sein de la première partie fermée (180) lorsque la première valeur de différence de température est supérieure à la valeur de différence de seuil ; et
le microprocesseur (220) étant en outre configuré pour générer un cinquième signal pour induire le ventilateur de condenseur (192) à refouler l'air au-delà du condenseur (190) pour induire le condenseur (190) à dissiper l'énergie thermique dans le réfrigérant lorsque la première valeur de différence de température est supérieure à la valeur de différence de seuil.

10. Système de refroidissement de module de batterie selon la revendication 1, comprenant en outre une bobine de refroidissement (424) qui reçoit un liquide en son sein afin d'éliminer de l'énergie thermique du réfrigérant dans le condenseur (190).

11. Système de refroidissement de module de batterie selon la revendication 1, dans lequel la première partie fermée (180) est une partie fermée étanche à l'air.

12. Procédé de refroidissement d'un système de batterie en utilisant le système de refroidissement de module de batterie selon la revendication 1, le système de refroidissement de module de batterie ayant un boîtier (130), un premier évaporateur (136), un ventilateur de premier évaporateur (132) et un condenseur (190), le boîtier (130) ayant une première partie fermée (180) et une seconde partie fermée (182), la première partie fermée (180) étant configurée pour recevoir un premier module de batterie (24) en son sein, le procédé comprenant :
la remise en circulation d'air dans une première boucle de trajet d'écoulement fermée (240) au sein de la première partie fermée (180) en utilisant le ventilateur de premier évaporateur (132), le premier évaporateur (136) étant configuré pour extraire l'énergie thermique de l'air dans la première boucle de trajet d'écoulement fermée (240) afin de réduire un niveau de température du premier module de batterie (24) dans la première partie fermée (180) du boîtier (130) ;
la réception d'énergie thermique dans un réfrigérant venant du premier évaporateur (136) dans un condenseur (190) disposé dans la seconde partie fermée (182) du boîtier (130) et la dissipation de l'énergie thermique en utilisant le condenseur (190) ; et
la remise en circulation du réfrigérant à travers le premier évaporateur (132) et le condenseur (190) en utilisant un compresseur (194) disposé dans la seconde partie fermée (182).

13. Procédé selon la revendication 12, dans lequel le système de refroidissement de module de batterie présente en outre un ventilateur de condenseur (192), un capteur de température (210) et un microprocesseur (220), le procédé comprenant en outre :
la génération d'un premier signal indicatif d'un niveau de température du premier module de batterie (24) en utilisant un capteur de température (210) ;
la génération d'un deuxième signal pour induire le compresseur (194) à remettre en circulation le réfrigérant à travers le premier évaporateur (132) et le condenseur (190) pour refroidir le premier module de batterie (24) en utilisant le microprocesseur (220) lorsque le premier signal indique que le niveau de température du premier module de batterie (24) est supérieur à un niveau de température de seuil ;
la génération d'un troisième signal pour induire le ventilateur de premier évaporateur (132) à remettre en circulation l'air dans la première boucle de trajet d'écoulement fermée (240) au sein de la première partie fermée (180) lorsque le premier signal indique que le niveau de température du premier module de batterie (24) est supérieur au niveau de température de seuil ; et
la génération d'un quatrième signal pour induire le ventilateur de condenseur (192) à refouler de l'air au-delà du condenseur (190) pour induire le condenseur (190) à dissiper de l'énergie thermique lorsque le premier signal indique que le niveau de température du premier module de batterie (24) est supérieur au niveau de température de seuil.

14. Procédé selon la revendication 12, dans lequel le système de refroidissement de module de batterie comprend en outre un second évaporateur (138) et un ventilateur de second évaporateur (134) disposé dans la première partie fermée (180), le second évaporateur (138) étant couplé en mode fluidique au condenseur (190), la première partie fermée (180) étant configurée pour recevoir un second module de batterie (26) en son sein, comprenant en outre :
la remise en circulation d'air dans une seconde boucle de trajet d'écoulement fermée (242) au sein de la première partie fermée (180) en utilisant le second ventilateur d'évaporateur (134), le second évaporateur (138) étant configuré pour extraire de l'énergie thermique de l'air dans la seconde boucle de trajet d'écoulement fermée (242) afin de réduire un niveau de température du second module de batterie (26) dans la première partie fermée (180) ;
la réception d'énergie thermique dans le réfrigérant venant des premier et second évaporateurs (136, 138) dans le condenseur (190) disposé dans la seconde partie fermée (182) et la dissipation de l'énergie thermique dans le réfrigérant en utilisant le condenseur (190) ; et
la remise en circulation du réfrigérant à travers le premier évaporateur (136), le second évaporateur (138) et le condenseur (190) en utilisant le compresseur (194) disposé dans la seconde partie fermée (182).

15. Procédé selon la revendication 12, dans lequel la première partie fermée (180) est une partie fermée étanche à l'air.
